Europäisches Patentamt

European Patent Office

Office européen des brevets

(19)

(11) Veröffentlichungsnummer : **0 347 408 B1**

(12) **EUROPÄISCHE PATENTSCHRIFT**

(45) Veröffentlichungstag der Patentschrift :
**06.05.92 Patentblatt 92/19**

(51) Int. Cl.⁵ : **B66C 13/26,** B66D 1/48, H02P 7/628

(21) Anmeldenummer : **89890159.0**

(22) Anmeldetag : **02.06.89**

(54) **Antrieb für Hubwerke od.dgl.**

(30) Priorität : **13.06.88 AT 1519/88**

(43) Veröffentlichungstag der Anmeldung :
**20.12.89 Patentblatt 89/51**

(45) Bekanntmachung des Hinweises auf die
Patenterteilung :
**06.05.92 Patentblatt 92/19**

(84) Benannte Vertragsstaaten :
**DE FR GB**

(56) Entgegenhaltungen :
**DE-A- 2 808 616
DE-B- 1 139 259
DE-C- 915 499
GB-A- 1 129 492
US-A- 3 218 536
US-A- 3 345 550
US-A- 3 668 489
US-A- 3 971 971**

(73) Patentinhaber : **VOITH WERKE Ing. A. Fritz
Voith Gesellschaft m.b.H. & Co. KG.
Langholzstrasse 16
A-4051 Traun- St.Martin (AT)**

(72) Erfinder : **Meingassner, Alois
Schachet
A-4681 Rottenbach (AT)**
Erfinder : **Lackner, Herbert
Hochstrasse 59
A-4020 Linz (AT)**

(74) Vertreter : **Hübscher, Heiner, Dipl.-Ing. et al
Patentanwälte Dipl.-Ing. Gerhard Hübscher,
Dipl.-Ing. Helmut Hübscher Dipl.-Ing. Heiner
Hübscher Spittelwiese 7
A-4020 Linz (AT)**

EP 0 347 408 B1

Jouve, 18, rue Saint-Denis, 75001 PARIS

EP 0 347 408 B1

## Beschreibung

Die Erfindung bezieht sich auf einen Antrieb für Hubwerke od.dgl., bestehend aus einem einen netzgespeisten Drehstrommotor und einen dem Drehstrommotor vorgeordneten Frequenzumwandler umfassenden Frequenzumwandlerantrieb.

Bisher sind die Drehstrommotoren von Hubwerksantrieben in ihrer Nennleistung auf die volle Tragkraft des Hubwerkes ausgelegt, so daß diese Hubwerke in der Lage sind, Voll- und Teillasten mit gleicher Hubgeschwindigkeit zu fördern. Dabei wurde gemäß der US-A-3 345 550 bereits vorgeschlagen, zur Überwachung der Fördergeschwindigkeit einen Frequenzumwandler einzusetzen und über diesen den Drehstrommotor zu regeln. Durch einen Vergleich der jeweiligen Motordrehzahl als Istwert mit einer vorgebbaren Bezugsgröße als Sollwert und das Ansteuern des Frequenzumwandlers in Abhängigkeit vom Ist-Sollwertunterschied läßt sich hier die Fördergeschwindigkeit auch bei unterschiedlichen Drehmomenten und Lasten weitgehend konstant halten. Allerdings werden Hubwerke nur ganz selten wirklich voll belastet und arbeiten meistens im Teillastbereich, beispielsweise wird eine Krananlage mit einer maximalen Tragkraft von 100 t sehr häufig zum Heben von Lasten unter 30 t und nur selten tatsächlich zum Heben von Lasten mit 100 t eingesetzt. Da außerdem geringere Lasten wesentlich schneller bewegt und gehandhabt werden können als schwere Lasten, ist es bisher notwendig, den Antrieb in recht unwirtschaftlicher Weise zu überdimensionieren oder auf eine größere Hubgeschwindigkeit für Teillasten zu verzichten.

Der Erfindung liegt daher die Aufgabe zugrunde, diese Mängel zu beseitigen und einen Antrieb der eingangs geschilderten Art zu schaffen, der aufwandsarm und sparsam ist und dennoch den Anforderungen eines Hubwerkes voll genügt.

Die Erfindung löst diese Aufgabe dadurch, daß der Frequenzumwandlerantrieb eine auf eine bestimmte Teillast des Hubwerkes ausgelegte Nennleistung besitzt, wobei die Motordrehzahl auf einen von der jeweiligen Motorleistung abhängigen Höchstwert begrenzt ist. Zu dieser Motordrehzahlbegrenzung läßt sich vorteilhafterweise der Frequenzumwandler in Abhängigkeit von der Stromaufnahme des Drehstrommotors als Maß dessen Leistung ansteuern.

Durch die Ausrüstung des Hubwerkes mit einem Frequenzumwandlerantrieb ist es möglich, das vom Drehstromotor abgebbare Drehmoment über die entsprechende Änderung der Netzfrequenz zu beeinflussen und das bei Nennfrequenz zur Verfügung stehende Maximalmoment durch ein Verdoppeln der Frequenz zu halbieren bzw. durch ein geeignetes Vervielfachen der Frequenz indirekt proportional zu verringern. Die zulässige Belastung des Frequenzumwandlers beschränkt den Regelbereich, wozu beispielsweise ein Strombegrenzer dient, der an der Belastungsgrenze eine weitere Frequenzerhöhung unterbindet. Da die Antriebsdrehzahl von der Frequenz abhängt, erlaubt dieser Frequenzumwandlerantrieb Vollasten mit niedriger Geschwindigkeit und Teillasten mit höherer Geschwindigkeit zu bewegen, so daß die zur Verfügung stehende Atriebsleistung genau an die Anforderungen einesz üblichen Kranbetriebes angepaßt werden kann. Um allerdings auch ein funktionssicheres Senken der Lasten zu ermöglichen, muß die Motordrehzahl bewußt begrenzt werden, damit sie den der vorgegebenen Frequenz bzw. dem abgebbaren Motormoment, also der jeweiligen Motorleistung zugehörigen Höchstwert nicht übersteigt und ein Durchgehen des Motors und ein Abstürzen der Last ausgeschlossen sind. Eine funktions- sichere Drehzahlbegrenzung ergibt sich dabei durch eine dauernde Überwachung der Motorstromaufnahme und der Frequenz, so daß bei Erreichen der jeweiligen Höchstwerte der Frequenzumwandler im Sinne einer Drehzahlverminderung des Motors angesteuert werden kann.

Dieser speziell auf Hubwerke ausgerichtete Frequenzumwandlerantrieb erlaubt es daher, die Antriebsleistung geringer zu dimensionieren und auf eine Teillast auszulegen, ohne funktionelle Einbußen erleiden zu müssen, da den Anforderungen eines Kranbetriebes entsprechend auch mit dieser geringeren Antriebsleistung Teillasten mit der gewünschten höheren Geschwindigkeit und die Vollasten forderungsgemäß langsamer gefördert werden können.

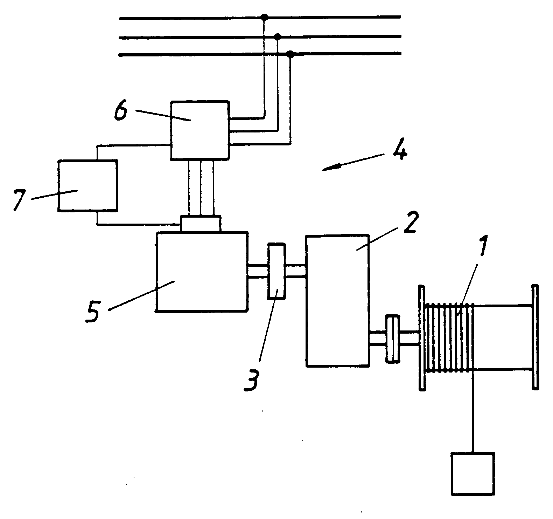

In der Zeichnung ist ein erfindungsgemäßer Hubwerksantrieb an Hand eines Blockschaltbildes rein schmeatishc veranschaulicht.

Ein durch Seiltrommel 1, Getriebe 2 und Bremse 3 angedeutetes Hubwerk ist mit einem Frequenzumwandlerantrieb 4 ausgerüstet, der einen netzgespeisten Drehstromotor 5 und einen dem Drehstromotor vorgeschalteten Frequenzumwandler 6 umfaßt. Ein Regler 7 überwacht die Belastung des Frequenzumwandlers 6 sowie die Frequenz und die Stromaufnahme des Drehstromotors 5, so daß es weder zu einer Überlastung des Frequenzumwandlers 6 durch ein Überschreiten des Regelbereiches noch zu einer Überhöhung der Motordrehzahl beim Absenken einer Last kommen kann. Die jeweils zulässige Höchstdrehzahl ist dabei von der Motorleistung abhängig und ein Erreichen dieser Höchstwerte führt automatisch zu einem Abregeln der Frequenz.

Beträgt die Netzfrequenz 50 Hz, wird beispielsweise der Drehstromotor 5 so ausgelegt, daß er sein volles Drehmoment bei der Nennfrequenz von 50 Hz und einer Drehzahl von 1000 U/min abgibt. Durch eine Erhöhung

2

der Frequenz durch den Frequenzumwandler 6 auf 100 Hz bzw. auf maximal 150 Hz steigt dann die Drehzahl auf 2000 U/min bzw. auf die volle Drehzahl von 3000 U/min und das nutzbare Drehmoment sinkt gleichzeitig auf die Hälfte bzw. auf ein Drittel des vollen Momentes. Um beim Ansenken der Last ein Durchgehen des Motors und damit ein Abstürzen der Last zu verhindern, wird die Stromaufnahme des Drehstrommotors 5 in Abhängigkeit von der jeweiligen Frequenz überwacht. Gibt der Motor 5 bei Nennfrequenz sein volles Drehmoment ab, darf die Motordrehzahl die Nenndrehzahl nicht übersteigen. Sinkt die Motorbelastung bzw. das Drehmoment auf die Hälfte, darf dementsprechend die Drehzahl nicht über das Doppelte der Nenndrehzahl hinausgehen und bei Ansinken auf ein Drittelmoment darf die Drehzahl nicht die dreifache Nenndrehzahl übersteigen, damit ein ordnungsgemäßer Betrieb gewährleistet ist. Die ständige Überwachung von Stromaufnahme und Frequenz ermöglicht die notwendige Drehzahlbegrenzung durch ein entsprechendes Ansteurn des Frequenzumwandlers im Sinne einer sinkenden Frequenz bei Erreichen der Drehzahlhöchstwerte, so daß sowohl beim Heben als auch beim Senken der Lasten die erforderliche indirekt proportionale Zuordnung von Drehmoment bzw. Belastung und Geschwindigkeit gegeben ist.

Ein beispeilweise lediglich auf ein Drittel der maximalen Hubwerksbelastung ausgelegter Frequenzumwandlerantrieb 4 erlaubt daher dennoch, Drittellasten mit voller Geschwindigkeit zu manipulieren, Halblasten mit Halbgeschwindigkeit und Vollasten mit Drittelgeschwindigkeit, was den üblichen Betriebsanforderungen einer Krananlage genügt und dabei eine besonders wirtschaftliche Nutzung der Antriebsleistung garantiert.

## Patentansprüche

1. Antrieb (4) für Hubwerke (1, 2, 3) od.dgl., bestehend aus einem einen netzgespeisten Drehstrommotor (5) und einen dem Drehstrommotor (5) vorgeordneten Frequenzumwandler (6) umfassenden Frequenzumwandlerantrieb (4), dadurch gekennzeichnet, daß der Frequenzumwandlerantrieb (4) eine auf eine bestimmte Teillast des Hubwerkes (1, 2, 3) ausgelegte Nennleistung besitzt, wobei die Motordrehzahl auf einen von der jeweiligen Motorleistung abhängigen Höchstwert begrenzt ist.

2. Antrieb nach Anspruch 1, dadurch gekennzeichnet, daß der Frequenzumwandler (6) zur Motordrehzahlbegrenzung in Abhängigkeit von der Stromaufnahme des Drehstrommotors (5) ansteuerbar ist.

## Claims

1. A drive (4) for lifting devices (1, 2, 3) or the like, the drive comprising: a mains-fed three-phase motor (5); and a frequency converter drive (4) comprising a frequency converter (6) which precedes the three-phase motor (5), characterised in that the frequency converter drive (4) has a rated power designed for a particular partial load of the lifting mechanism (1, 2, 3), the motor speed being limited to a maximum which depends upon the motor output.

2. A drive according to claim 1, characterised in that to limit motor speed the frequency converter (6) can be triggered in dependence upon the current drawn by the three-phase motor (5).

## Revendications

1. Entraînement (4) pour dispositifs de levage (1, 2, 3) ou similaires, composé d'un entraînement (4) à transformateur de fréquence qui comprend un moteur (5) à courant triphasé, alimenté par le secteur, et un transformateur (6) de fréquence monté en amont du moteur (5) à courant triphasé, caractérisé par le fait que l'entraînement (4) à transformateur de fréquence jouit d'une puissance nominale qui est conçue pour une partie déterminée de la charge du dispositif de levage (1, 2, 3), tandis que la vitesse de rotation du moteur est limitée à une valeur maximale dépendant dans chaque cas de la puissance au moteur.

2. Entraînement suivant la revendication 1, caractérisé par le fait que, pour limiter la vitesse de rotation du moteur, le transformateur (6) de fréquence peut être piloté en fonction de l'intensité absorbée par le moteur (5) à courant triphasé.